# EUROPEAN PATENT SPECIFICATION

(11) **EP 2 663 783 B1**
(45) Date of publication and mention of the grant of the patent: **10.07.2019**
(21) Application number: 11855626.5
(22) Date of filing: 15.12.2011
(51) Int. Cl.: F16D 48/08, B60W 30/184

(54) **METHOD AND CLUTCH ACTUATOR CONTROL UNIT FOR CONTROLLING THE TORQUE TRANSFER ON A POWER TRAIN FOR A VEHICLE**
VERFAHREN UND KUPPLUNGSAKTOR-STEUEREINRICHTUNG ZUR STEUERUNG DER DREHMOMENTÜBERTRAGUNG EINES ANTRIEBSSTRANGS FÜR EIN FAHRZEUG
UNITÉ DE COMMANDE D'ACTIONNEUR D'EMBRAYAGE PERMETTANT DE COMMANDER LE TRANSFERT DE COUPLE SUR UN GROUPE MOTOPROPULSEUR DE VÉHICULE ET PROCÉDÉ ASSOCIÉ

(30) Priority: 11.01.2011 SE 1150009
(43) Date of publication of application: 20.11.2013
(73) Proprietor: Scania CV AB, 151 87 Södertälje (SE)
(72) Inventor: NORDKVIST, Johan, S-150 23 Enhörna (SE)
(74) Representative: Scania CV AB
(86) International application number: PCT/SE2011/051517
(87) International publication number: WO 2012/096612

(56) References cited:
- EP-A1- 1 186 792
- EP-A2- 1 035 344
- EP-A2- 1 557 316
- DE-A1- 10 025 882
- GB-A- 2 319 820
- GB-A- 2 328 993
- US-A1- 2002 084 129
- US-A1- 2004 143 383
- US-A1- 2006 116 806
- US-B2- 7 276 015

## Description

### Field of the invention

The present invention relates to a method for controlling the torque transfer on a power train for a vehicle, and a clutch actuator control device for a vehicle.

The invention relates in particular to a controlled clutch actuator which provides overload protection for the torque on the power train.

### Background to the invention

When a heavy vehicle is being set in motion, particularly uphill, it may happen that it rolls in the opposite direction to that intended. When the clutch is released and the engine with its large moment of inertia is to be accelerated or retarded, there are very substantial loads on the power train, with consequent risk that, for example, the propeller shaft or some other weak link in the power train may be subject to such great loads as to suffer damage or be twisted off.

There is thus at present a problem of universal shafts breaking in the situation described above. A possible solution is to use a so-called "hill-hold" function whereby the vehicle is braked to prevent its rolling and when it does begin to move forward the brakes are released automatically. EP1035344A2 discloses an example of hill-hold function. In certain cases, using the hill-hold function may solve the problem, but it works less well in hill situations where, for example, so-called rocking occurs.

A number of patent specifications described briefly below discuss various aspects of how the power train can be protected, and particularly by controlling the engagement of the vehicle's clutch. GB2328993A, according to the respective preambles of claims 1 and 9, shows a device for adjusting the clutch torque proportional to the engine torque.

EP-1186792 refers to a method for protecting the power train from damage, e.g. when moving off on hills. This is achieved inter alia by partly applying the clutch in order to be able to determine in which direction the gearbox input shaft is rotating.

US-2002/0084129 refers to a clutch device for a vehicle. The clutch may be acted upon depending on the load to which the vehicle is subject, e.g. when travelling uphill or downhill.

US-2004/0143383 refers to a method for controlling and/or adjusting a torque transfer system for the power train of a vehicle. The clutch torque is calculated according to a moving-off resistance for the vehicle in order to employ a strategy when setting the vehicle in motion. According to the method described, the strategy is modified so that the clutch torque is appropriate to the moving-off situation.

The object of the present invention is to propose a method and a clutch actuator system which achieve better and safer transfer of the torque on a vehicle's power train so that the risk of damage to the power train is substantially reduced.

### Summary of the invention

The above objects are achieved with the invention defined by the independent claims.

Preferred embodiments are defined by the dependent claims.

In general terms the present invention may be summarised to the effect that the engagement of the clutch device is controlled so as to limit the maximum torque transferred relative to the load which the power train will tolerate.

According to an embodiment, a clutch actuator signal is determined by using one or more parameters related to the engagement force in the clutch device.

According to another embodiment, the clutch actuator signal is determined by using one or more parameters related to the engagement time for the clutch device.

The maximum load tolerated by the power train depends inter alia on which gear is engaged, the dimensions of the shafts, the configuration of the gearbox, the configuration of the differential, etc.

A controlled clutch actuator, e.g. an automatic clutch actuator, makes it possible for the clutch to be regulated by means of software to a maximum transferable torque, e.g. depending on the gear engaged in the gearbox, which when, for example, a vehicle being set in motion rolls in the opposite direction to that intended, prevents the propeller shaft or some other weak link in the power train from being twisted off when the clutch is released and the engine with its large moment of inertia is to be retarded.

The present invention thus involves the clutch being subject to torque limitation depending on torque coming "downstream" of the clutch device.

An advantage of the invention is the possibility in all situations of having control of potential overloads in the power train.

The invention relates in particular to a controlled clutch actuator which provides overload protection against excessive torque load upon the power train.

### Brief description of drawings

- Figure 1: is a simplified block diagram illustrating the present invention.
- Figure 2: is a graph illustrating the present invention.
- Figure 3: is a flowchart illustrating the present invention.

### Detailed description of preferred embodiments of the invention

The invention is described below with reference to the attached drawings.

Clutch device means here a device comprising a clutch which can be engaged or disengaged, can assume any state ranging from fully engaged to fully disengaged and takes the form of, for example, a friction clutch or a disc clutch.

The clutch device can switch between various operating states which affect the relationship between rotating transfer quantities. In particular, the clutch device forms part of the transmission system and can be disengaged so that its input shaft and output shaft are substantially disconnected from one another. The clutch device can also change to being fully engaged so that, when a gear is engaged, the input shaft is connected to the output shaft. The clutch device is so configured that it can be in operating states in which it transmits a predetermined amount of torque.
The clutch device comprises a clutch actuator which controls its engagement on the basis of a clutch actuator signal generated by a clutch actuator control unit.

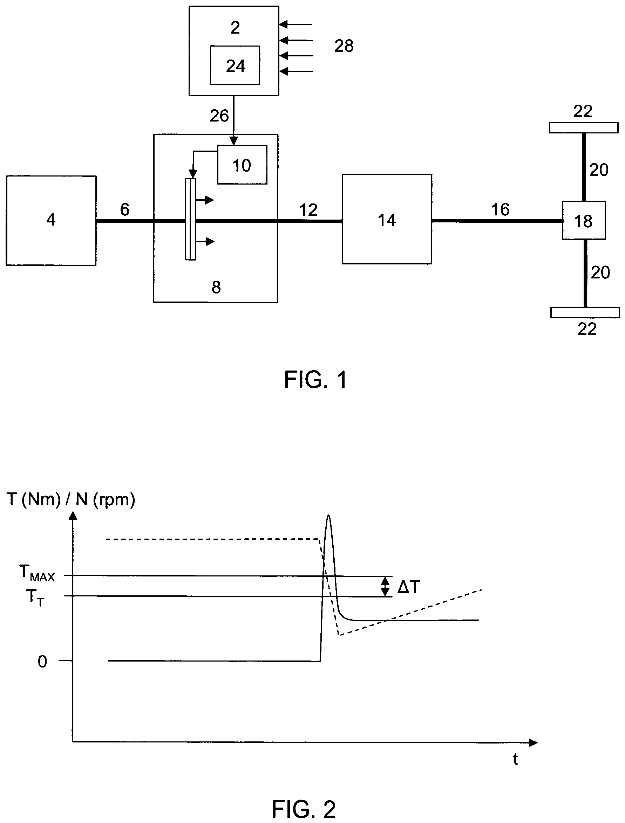

Figure 1 is a schematic diagram of a vehicle in which the present invention is applied.

Figure 1 depicts a clutch actuator control unit 2 for controlling the torque transfer on a power train of the vehicle in which a driving torque is generated by a prime mover 4, e.g. an electrical machine or a combustion engine, and is conveyed downstream via an output shaft 6 from the prime mover to a clutch device 8 comprising a clutch actuator 10. The driving torque is then conveyed to an input shaft 12 of a gearbox 14, to an output propeller shaft 16 leading from the gearbox and, via a differential gear 18, to the driveshafts 20 of the vehicle's wheels 22. The clutch actuator control unit 2 comprises a calculation unit 24 adapted to determining a clutch actuator control signal 26 which controls the engagement of the clutch device 8.

The present invention is of course applicable to other types of power trains than that exemplified above.

According to the invention, the calculation unit 24 is adapted to calculating a maximum torque Tₘₐₓ which is the largest load tolerated by the power train downstream of the clutch device 8, and to determining a torque Tₜ which is transferable by the clutch device and is less than or equal to said maximum torque Tₘₐₓ. The calculation unit 24 is further adapted to determining a clutch actuator control signal 26 for engaging the clutch device 8 so that the maximum load to which the power train downstream of the clutch device is subject from the torque transmitted by the clutch device is Tₜ. The clutch actuator control signal 26 determined is then passed to the clutch actuator 10 to serve as a basis for its control.

According to an embodiment, the clutch actuator control signal is determined by using one or more parameters related to the engagement force in the clutch device.
This may be done by determining how firmly the clutch discs are clamped between the clutch cover and the clutch control element.

According to another embodiment, the clutch actuator control signal is determined by using one or more parameters related to the engagement time for the clutch device. The engagement or sliding time is the time the clutch takes to change from fully disengaged to fully engaged and is typically within the range 0.05 - 1 second and preferably 0.05 - 0.5 second.
The shortest possible sliding time required for the torque transferred not to exceed Tₜ is here calculated.

These two embodiments may, within the scope of the present invention, be combined by the clutch actuator control signal being determined by using both parameters related to the engagement force in the clutch device and parameters related to the engagement time for the clutch device.

According to a preferred embodiment, Tₘₐₓ is calculated by the calculation unit 24 on the basis of the power train's current load state, which depends inter alia on the gear currently engaged in the gearbox and the transmission ratio of the differential gear. To make these calculations, the control unit 2 is adapted to receiving one or more sensor signals 28 from sensors for monitoring the load state of the power train downstream of the clutch device, Tₘₐₓ being calculated by means of these signals. These signals take the form inter alia of one or more signals generated on the basis of measured rotation of the shafts 12, 16 and 20. According to an embodiment, the calculation Tₘₐₓ also takes into account strength parameters of the shafts downstream of the clutch device.

Tₘₐₓ is determined for the respective components of the power train and depends inter alia on the gear chosen, which is detected with advantage by sensors situated in the gearbox or associated with the gear lever.

The shock load T_{ch} which occurs when the clutch is released rapidly is calculated on the basis of the engine's moment of inertia, the respective rotation speeds before and after the clutch release and the time which the change of rotation speed takes, i.e. how efficient the clutch is. In simplified terms, the shock load may be expressed by the formula T_{ch} = J (ωf- ωe)/t, in which J is the moment of inertia ahead of the disc, i.e. comprising the engine and the clutch cover, ωf is the engine's rotation speed before the clutch is engaged, coe the engine speed after the clutch has been engaged and t the engagement time.

The pre-engagement speed (ωf) can be measured and is equal to current engine speed, but the speed after clutch engagement (ωe) is calculated on the basis of vehicle speed and the power train's total transmission ratio.

If T_{ch} exceeds Tₘₐₓ for the current gear, the clutch is regulated to Tₜ so that the torque will not exceed this.

When the calculated maximum torque has been calculated, the torque Tₜ is calculated by Tₜ = Tₘₐₓ - ΔT, in which ΔT is a predetermined safety margin which depends on Tₘₐₓ and is preferably within the range 10-30% of Tₘₐₓ.

Figure 2 is a graph schematically illustrating the torque to which the power train is subject in a situation where the vehicle is to be set in motion on a hill but rolls backwards when the clutch is applied.

The torque is substantially zero when the clutch device is fully disengaged. A large increase in the torque, a torque peak, may be observed when the clutch is engaged, subjecting the power train to substantial stresses. After the peak, the torque transmitted by the power train settles at another constant level at which the prime mover drives the power train. The graph has torque on the *y* axis and time on the x axis. Tₘₐₓ and Tₜ have been drawn in. The fact that the maximum amplitude of the torque peak is limited reduces, according to the invention, the load upon the power train.
The same graph also shows the rotation speed (broken line) in revolutions per minute (rpm) of the engine shaft. When the engine is disengaged, it will run at a higher speed before dropping at the time of engagement and rising again when the clutch has been engaged.

The present invention is applicable both to an automatic clutch and to a manual clutch device with electrical transfer of control signals to the clutch actuator, so-called "clutch by wire".

The invention comprises also a method for controlling the torque transfer on a power train for a vehicle in which a driving torque is generated by a prime mover and is conveyed downstream via an output shaft from the prime mover to a clutch device.
The driving torque is further conveyed to an input shaft of a gearbox, to a output propeller shaft leading from the gearbox and, via a differential gear, to the driveshafts of the vehicle's wheels. The constituent elements and functions of the power train were described above in relation to Figure 1.

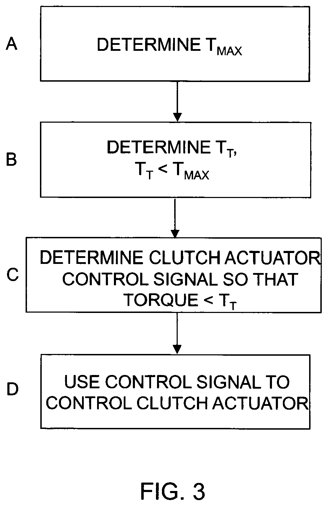

The method according to the invention is illustrated schematically by the flowchart in Figure 3 and comprises:
A) calculating a maximum torque Tₘₐₓ which is the largest load tolerated by the power train downstream of the clutch device,
B) determining a torque Tₜ which is transferable by the clutch device and is less than or equal to Tₘₐₓ,
C) determining a clutch actuator signal appropriate to engaging the clutch device so that the maximum load upon the power train downstream of the clutch device from the torque transmitted by the clutch device will be Tₜ, and
D) using the clutch actuator signal determined to control the clutch actuator.

According to an embodiment, at step C the clutch actuator signal is determined by using one or more parameters related to the engagement force in the clutch device.

According to another embodiment, at step C the clutch actuator control signal is determined by using one or more parameters related to the engagement time for the clutch device.

According to a preferred embodiment, Tₘₐₓ is calculated at step A on the basis of the power train's current load state. The calculation of Tₘₐₓ may also be based on the gear currently engaged in the gearbox and the transmission ratio of the differential gear. Strength parameters of the shafts downstream of the clutch device may also be taken into account.

When Tₘₐₓ has been calculated, Tₜ can be calculated by Tₜ = Tₘₐₓ - ΔT, in which ΔT is a predetermined safety margin which depends on Tₘₐₓ and may, for example, be within the range 10-30% of Tₘₐₓ.

The present invention is not restricted to the preferred embodiments described above. Various alternatives, modifications and equivalents may be used. The above embodiments are therefore not to be regarded as limiting the invention's protective scope which is defined by the attached claims.

## Claims

1. A method for controlling the torque transfer on a power train for a vehicle in which a driving torque is generated by a prime mover and is conveyed downstream via an output shaft from the prime mover to a clutch device, then to an input shaft of a gearbox, to an output propeller shaft leading from the gearbox and, via a differential gear, to the driveshafts of the vehicle's wheels,
**characterised in that** the method comprises:
A) calculating a maximum torque Tₘₐₓ which is the largest load tolerated by the power train downstream of the clutch device,
B) determining a torque Tₜ which is transferable by the clutch device and is less than or equal to Tₘₐₓ,
C) determining a clutch actuator signal appropriate to engaging the clutch device so that the maximum load upon the power train downstream of the clutch device, from the torque transmitted by the clutch device, will be Tₜ, and
D) using the clutch actuator signal determined to control the clutch actuator.

2. A method according to claim 1, in which at step C the clutch actuator signal is determined by using one or more parameters related to the engagement force in the clutch device.

3. A method according to claim 1 or 2, in which at step C the clutch actuator control signal is determined by using one or more parameters related to the engagement time for the clutch device.

4. A method according to any one of claims 1-3, in which Tₘₐₓ is calculated at step A on the basis of the power train's current load state.

5. A method according to any one of claims 1-4, in which Tₘₐₓ is calculated at step A on the basis of the gear currently engaged in the gearbox and the transmission ratio of the differential gear.

6. A method according to claim 5, in which the calculation of Tₘₐₓ at step A is based also on strength parameters of the shafts downstream of the clutch device.

7. A method according to any one of claims 1-6, in which Tₜ = Tₘₐₓ - ΔT, in which ΔT is a predetermined safety margin which depends on Tₘₐₓ.

8. A method according to claim 7, in which Tₜ = Tₘₐₓ - ΔT, in which ΔT is a predetermined safety margin within the range 10-30% of Tₘₐₓ.

9. A clutch actuator control unit (2) for controlling the torque transfer on a power train for a vehicle in which a driving torque is generated by a prime mover (4) and is conveyed downstream via an output shaft (6) from the prime mover to a clutch device (8) comprising a clutch actuator (10), then to an input shaft (12) to a gearbox (14), to an output propeller shaft (16) from the gearbox (14) and, via a differential gear (18), to the driveshafts (20) of the vehicle's wheels (22), which clutch actuator control unit (2) comprises a calculation unit (24) adapted to determining a clutch actuator control signal (26) which controls the engagement of the clutch device (8),
**characterised in that**
the calculation unit (24) is adapted to calculating a maximum torque Tₘₐₓ which is the largest load tolerated by the power train downstream of the clutch device (8), to calculating a torque Tₜ which is transferable by the clutch device and is less than or equal to said maximum torque Tₘₐₓ, to determining a clutch actuator control signal (26) for engaging the clutch device (8) so that the maximum load to which the power train downstream of the clutch device is subject from the torque transmitted by the clutch device will be Tₜ, and to passing the clutch actuator control signal (26) determined to the clutch actuator (10) to serve as a basis for its control.

10. A clutch actuator control unit according to claim 9, in which the clutch actuator signal is determined by using one or more parameters related to the engagement force in the clutch device.

11. A clutch actuator control unit according to claim 9 or 10, in which the clutch actuator control signal is determined by using one or more parameters related to the engagement time for the clutch device.

12. A clutch actuator control unit according to any one of claims 9-11, in which Tₘₐₓ is calculated on the basis of the power train's current load state.

13. A clutch actuator control unit according to any one of claims 9-12, in which Tₘₐₓ is calculated on the basis of the gear currently engaged in the gearbox and the transmission ratio of the differential gear.

14. A clutch actuator control unit according to any one of claims 9-13, in which the control unit is adapted to receiving one or more sensor signals (28) from sensors which are adapted to monitoring the load state of the power train downstream of the clutch device, and Tₘₐₓ is calculated by means of these signals.

15. A clutch actuator control unit according to any one of claims 9-14, in which Tₘₐₓ is calculated on the basis of strength parameters of the shafts downstream of the clutch device.

16. A clutch actuator control unit according to any one of claims 9-15, in which Tₜ = Tₘₐₓ - ΔT, and ΔT is a predetermined safety margin which depends on Tₘₐₓ.

17. A clutch actuator control unit according to any one of claims 9-16, in which Tₜ = Tₘₐₓ - ΔT, and ΔT is a predetermined safety margin which is within the range 10-30% of Tₘₐₓ.

18. A clutch actuator control unit according to any one of claims 9-17, in which said clutch device is an automatic clutch.

19. A clutch actuator control unit according to any one of claims 9-18, in which said clutch device is a manual clutch device with electrical transmission ("clutch by wire").

## Patentansprüche

1. Verfahren zum Steuern der Drehmomentübertragung auf einen Antriebsstrang für ein Fahrzeug, wobei das Drehmoment von einem Antriebsmotor erzeugt und über eine Ausgangswelle vom Antriebsmotor stromabwärts an eine Kupplungsvorrichtung, dann an eine Eingangswelle eines Getriebes zu einer Ausgangs-Abtriebswelle übertragen wird, die aus dem Getriebe über ein Differentialgetriebe zu den Antriebswellen der Fahrzeugräder herausführt, **dadurch gekennzeichnet, dass** das Verfahren aufweist:
A) Berechnen eines maximalen Drehmoments Tₘₐₓ, bei dem es sich um die höchste vom Antriebsstrang stromabwärts der Kupplungsvorrichtung tolerierte Last handelt,
B) Bestimmen eines Drehmoments Tₜ, das von der Kupplungsvorrichtung übertragen werden kann und kleiner oder gleich ist Tₘₐₓ,
C) Bestimmen eines für das Einrücken der Kupplungsvorrichtung geeigneten Kupplungsaktor-Signals, damit die infolge des durch die Kupplungsvorrichtung übertragenen Drehmoments stromabwärts der Kupplungsvorrichtung auf den Antriebsstrang wirkende Last maximal Tₜ ist, und
D) Verwenden des bestimmten Kupplungsaktor-Signals zum Steuern des Kupplungsaktors.

2. Verfahren nach Anspruch 1, wobei in Schritt C das Kupplungsaktor-Signal durch Verwenden eines oder mehrerer Parameter, die mit der Einkuppelkraft in der Kupplungsvorrichtung in Zusammenhang stehen, bestimmt wird.

3. Verfahren nach Anspruch 1 oder 2, wobei in Schritt C das Kupplungsaktor-Steuersignal durch Verwenden eines oder mehrerer Parameter, die mit der Einkuppelzeit für die Kupplungsvorrichtung in Zusammenhang stehen, bestimmt wird.

4. Verfahren nach einem der Ansprüche 1 bis 3, wobei Tₘₐₓ in Schritt A auf Basis des aktuellen Lastzustands des Antriebsstrangs berechnet wird.

5. Verfahren nach einem der Ansprüche 1 bis 4, wobei Tₘₐₓ in Schritt A auf Basis des im Getriebe aktuell eingelegten Gangs und des Übersetzungsverhältnisses des Differentialgetriebes berechnet wird.

6. Verfahren nach Anspruch 5, wobei die Berechnung von Tₘₐₓ in Schritt A auch auf Festigkeitsparametern der Wellen stromabwärts der Kupplungsvorrichtung basiert.

7. Verfahren nach einem der Ansprüche 1 bis 6, wobei Tₜ = Tₘₐₓ - ΔT, wobei ΔT eine vorgegebene Sicherheitsmarge ist, die von Tₘₐₓ abhängt.

8. Verfahren nach Anspruch 7, wobei Tₜ = Tₘₐₓ- ΔT, wobei ΔT eine vorgegebene Sicherheitsmarge im Bereich von 10 bis 30% von Tₘₐₓ ist.

9. Kupplungsaktor-Steuereinheit (2) zum Steuern der Drehmomentübertragung auf einen Antriebsstrang für ein Fahrzeug, wobei das Drehmoment von einem Antriebsmotor (4) erzeugt und über eine Ausgangswelle (6) vom Antriebsmotor stromabwärts an eine Kupplungsvorrichtung (8) mit einem Kupplungsaktor (10), dann an eine Eingangswelle (12) an ein Getriebe (14), vom Getriebe (14) an eine Ausgangs-Abtriebswelle (16) und über ein Differentialgetriebe (18) zu den Antriebswellen (20) der Fahrzeugräder (22) übertragen wird, wobei die Kupplungsaktor-Steuereinheit (2) eine Berechnungseinheit (24) aufweist, die dazu eingerichtet ist, ein Kupplungsaktor-Steuersignal (26) zu bestimmen, das das Einkuppeln der Kupplungsvorrichtung (8) steuert,
**dadurch gekennzeichnet, dass**
die Berechnungseinheit (24) zur Berechnung eines maximalen Drehmoments Tₘₐₓ eingerichtet ist, bei dem es sich um die höchste vom Antriebsstrang stromabwärts der Kupplungsvorrichtung (8) tolerierte Last handelt, zum Berechnen eines Drehmoments Tₜ, das von der Kupplungsvorrichtung übertragen werden kann und kleiner oder gleich ist dem maximalen Drehmoment Tₘₐₓ, zum Bestimmen eines Kupplungsaktor-Steuersignals (26) zum Einkuppeln der Kupplungsvorrichtung (8), so dass die auf den Antriebsstrang stromabwärts der Kupplungsvorrichtung wirkendende Last, die von dem durch die Kupplungsvorrichtung übertragenen Drehmoment abhängt, maximal Tₜ ist, und zur Weiterleitung des bestimmten Kupplungsaktor-Signals (26) an den Kupplungsaktor (10) als Basis für dessen Steuerung.

10. Kupplungsaktor-Steuereinheit nach Anspruch 9, wobei das Kupplungsaktor-Signal durch Verwenden eines oder mehrerer Parameter, die mit der Einkuppelkraft in der Kupplungsvorrichtung in Zusammenhang stehen, bestimmt wird.

11. Kupplungsaktor-Steuereinheit nach Anspruch 9 oder 10, wobei das Kupplungsaktor-Steuersignal durch Verwenden eines oder mehrerer Parameter, die mit der Einkuppelzeit in der Kupplungsvorrichtung in Zusammenhang stehen, bestimmt wird

12. Kupplungsaktor-Steuereinheit nach einem der Ansprüche 9 bis 11, wobei Tₘₐₓ auf Basis des aktuellen Lastzustands des Antriebsstrangs berechnet wird.

13. Kupplungsaktor-Steuereinheit nach einem der Ansprüche 9 bis 12, wobei Tₘₐₓ auf Basis des im Getriebe aktuell eingelegten Gangs und des Übersetzungsverhältnisses des Differentialgetriebes berechnet wird.

14. Kupplungsaktor-Steuereinheit nach einem der Ansprüche 9 bis 13, wobei die Steuereinheit zum Empfangen eines oder mehrerer Sensorsignale (28) von Sensoren eingerichtet ist, die zum Überwachen des Lastzustands des Antriebsstrangs stromabwärts der Kupplungsvorrichtung eingerichtet sind, und Tₘₐₓ mittels dieser Signale berechnet wird.

15. Kupplungsaktor-Steuereinheit nach einem der Ansprüche 9 bis 14, wobei Tₘₐₓ auf Basis von Festigkeitsparametern der Wellen stromabwärts der Kupplungsvorrichtung berechnet wird.

16. Kupplungsaktor-Steuereinheit nach einem der Ansprüche 9 bis 15, wobei Tₜ = Tₘₐₓ-ΔT und ΔT eine vorgegebene Sicherheitsmarge ist, die von Tₘₐₓ abhängt.

17. Kupplungsaktor-Steuereinheit nach einem der Ansprüche 9 bis 16, wobei Tₜ = Tₘₐₓ-ΔT und ΔT eine vorgegebene Sicherheitsmarge im Bereich von 10 bis 30% von Tₘₐₓ ist.

18. Kupplungsaktor-Steuereinheit nach einem der Ansprüche 9 bis 17, wobei die Kupplungsvorrichtung eine automatische Kupplung ist.

19. Kupplungsaktor-Steuereinheit nach einem der Ansprüche 9 bis 18, wobei die Kupplungsvorrichtung eine manuelle Kupplungsvorrichtung mit elektrischer Übertragung ("clutch by wire") ist.

## Revendications

1. Procédé pour le contrôle du transfert de couple dans un groupe motopropulseur pour un véhicule, dans lequel un couple moteur est généré par un moteur principal et est transmis en aval au moyen d'un arbre de sortie du moteur principal à un dispositif d'embrayage puis à un arbre d'entrée d'une boîte à engrenages, à un arbre porte-hélice de sortie sortant de la boîte à engrenages et, à travers un engrenage différentiel, aux arbres de transmission des roues du véhicule,
**caractérisé en ce que** le procédé comprend :
A) le calcul d'un couple maximal Tₘₐₓ qui est la charge la plus élevée tolérée par le groupe motopropulseur en aval du dispositif d'embrayage,
B) la détermination d'un couple Tₜ qui est transférable par le dispositif d'embrayage et est inférieur ou égal à Tₘₐₓ,
C) la détermination qu'un signal d'actionneur d'embrayage approprié pour l'enclenchement du dispositif d'embrayage de telle façon que la charge maximale sur le groupe motopropulseur en aval du dispositif d'embrayage, à partir du couple transmis par le dispositif d'embrayage, sera Tₜ, et
D) l'utilisation du signal d'actionneur d'embrayage déterminé pour la commande de l'actionneur d'embrayage.

2. Procédé selon la revendication 1, dans lequel dans l'étape C, le signal d'actionneur d'embrayage est déterminé en utilisant un ou plusieurs paramètres liés à la force d'enclenchement dans le dispositif d'embrayage.

3. Procédé selon la revendication 1 ou 2, dans lequel dans l'étape C, le signal de commande de l'actionneur d'embrayage est déterminé en utilisant un ou plusieurs paramètres liés au temps d'enclenchement dans le dispositif d'embrayage.

4. Procédé selon l'une quelconque des revendications 1 à 3, dans lequel T max est calculé dans l'étape A sur la base de l'état de charge actuel du groupe motopropulseur.

5. Procédé selon l'une quelconque des revendications 1 à 4, dans lequel T max est calculé dans l'étape A sur la base de l'engrenage actuellement enclenché dans la boîte à engrenages et du rapport de transmission de l'engrenage différentiel.

6. Procédé selon la revendication 5, dans lequel le calcul de Tₘₐₓ dans l'étape A est aussi basé sur des paramètres de résistance des arbres en aval du dispositif d'embrayage.

7. Procédé selon l'une quelconque des revendications 1 à 6, dans lequel Tₜ = Tₘₐₓ - ΔT, où ΔT est une marge de sécurité prédéterminée qui dépend de Tₘₐₓ.

8. Procédé selon la revendication 7, dans lequel Tₜ = Tₘₐₓ - ΔT, où ΔT est une marge de sécurité prédéterminée dans la plage de 10 à 30 % de Tₘₐₓ.

9. Unité de commande d'actionneur d'embrayage (2) pour la commande du transfert de couple dans un groupe motopropulseur pour un véhicule, dans laquelle un couple moteur est généré par un moteur principal (4) et est transmis en aval à travers un arbre de sortie (6) du moteur principal à un dispositif d'embrayage (8) comprenant un actionneur d'embrayage (10), puis à un arbre d'entrée (12) à une boîte à engrenages (14), à un arbre porte-hélice (16) de la boîte à engrenages (14) et, à travers un engrenage différentiel (18), aux arbres de transmission (20) des roues (22) du véhicule, ladite unité de commande d'actionneur d'embrayage (2) comprenant une unité de calcul (24) adaptée pour déterminer un signal de commande d'actionneur d'embrayage (26) qui commande l'enclenchement du dispositif d'embrayage (8),
**caractérisée en ce que**
l'unité de calcul (24) est adaptée pour calculer un couple maximal Tₘₐₓ qui est la charge la plus élevée tolérée par le groupe motopropulseur en aval du dispositif d'embrayage (8), pour calculer un couple Tₜ qui est transférable par le dispositif d'embrayage et est inférieur ou égal audit couple maximal T max, pour déterminer un signal de commande d'actionneur d'embrayage (26) pour l'enclenchement du dispositif d'embrayage (8) de telle façon que la charge maximale à laquelle le groupe motopropulseur en aval du dispositif d'embrayage est soumis, en fonction du couple transmis par le dispositif d'embrayage, sera Tₜ, et pour transmettre le signal de commande d'actionneur d'embrayage (26) déterminé à l'actionneur d'embrayage (10) pour servir de base pour sa commande.

10. Unité de commande de l'actionneur d'embrayage selon la revendication 9, dans laquelle le signal d'actionneur d'embrayage est déterminé en utilisant un ou plusieurs paramètres liés à la force d'enclenchement dans le dispositif d'embrayage.

11. Unité de commande de l'actionneur d'embrayage selon la revendication 9 ou 10, dans laquelle le signal d'actionneur d'embrayage est déterminé en utilisant un ou plusieurs paramètres liés au temps d'enclenchement pour le dispositif d'embrayage.

12. Unité de commande de l'actionneur d'embrayage selon l'une quelconque des revendications 9 à 11, dans laquelle Tₘₐₓ est calculé sur la base de l'état de charge actuel du groupe motopropulseur.

13. Unité de commande de l'actionneur d'embrayage selon l'une quelconque des revendications 9 à 12, dans laquelle Tₘₐₓ est calculé sur la base de l'engrenage actuellement enclenché dans la boîte à engrenages et du rapport de transmission de l'engrenage différentiel.

14. Unité de commande de l'actionneur d'embrayage selon l'une quelconque des revendications 9 à 13, dans laquelle l'unité de commande est adaptée pour recevoir un ou plusieurs signaux de capteurs (28) de capteurs qui sont adaptés pour surveiller l'état de charge du groupe motopropulseur en aval du dispositif d'embrayage, et Tₘₐₓ est calculé au moyen de ces signaux.

15. Unité de commande de l'actionneur d'embrayage selon l'une quelconque des revendications 9 à 14, dans laquelle Tₘₐₓ est calculé sur la base de paramètres de résistance des arbres en aval du dispositif d'embrayage.

16. Unité de commande de l'actionneur d'embrayage selon l'une quelconque des revendications 9 à 15, dans laquelle Tₜ = Tₘₐₓ - ΔT, et ΔT est une marge de sécurité prédéterminée qui dépend de Tₘₐₓ.

17. Unité de commande de l'actionneur d'embrayage selon l'une quelconque des revendications 9 à 16, dans laquelle Tₜ = Tₘₐₓ - ΔT, et ΔT est une marge de sécurité prédéterminée dans la plage de 10 à 30 % de Tₘₐₓ.

18. Unité de commande de l'actionneur d'embrayage selon l'une quelconque des revendications 9 à 17, dans laquelle ledit dispositif d'embrayage est un embrayage automatique.

19. Unité de commande de l'actionneur d'embrayage selon l'une quelconque des revendications 9 à 18, dans laquelle ledit dispositif d'embrayage est un dispositif d'embrayage manuel avec un transmission électrique (« clutch-by-wire »).
